(19) Europäisches Patentamt

European Patent Office

Office européen des brevets

(11) **EP 1 045 313 A2**

(12) **EUROPEAN PATENT APPLICATION**

(43) Date of publication:
**18.10.2000 Bulletin 2000/42**

(51) Int. Cl.7: **G06F 17/30**

(21) Application number: **00201205.2**

(22) Date of filing: **03.04.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **14.04.1999 US 291857**

(71) Applicant: **EASTMAN KODAK COMPANY**
**Rochester, New York 14650 (US)**

(72) Inventors:
• **Zhu, Wei,**
**c/o Eastman Kodak Company**
**Rochester, New York 14650-2201 (US)**

• **Mehrotra, Rajiv,**
**c/o Eastman Kodak Company**
**Rochester, New York 14650-2201 (US)**

(74) Representative:
**Parent, Yves et al**
**KODAK INDUSTRIE**
**Département Brevets - CRT**
**Zone Industrielle**
**B.P. 21**
**71102 Chalon-sur-Saône Cédex (FR)**

(54) **Perceptually significant feature-based image archival and retrieval**

(57)    A method for archiving an image based on its depictive feature-based representation, the method comprises the steps of automatically extracting the representation of the image in terms of one or more perceptually significant depictive features that dominate a perception of the image; and storing the image and its representation in a database.

IMAGE — S10

SELECT A DEPICTIVE FEATURE f

S20

ANALYZE IMAGE TO IDENTIFY ITS
PERCEPTUALLY SIGNIFICANT COMPONENTS OF

S30

REPRESENT IMAGE IN TERMS OF ITS DETECTED
PERCEPTUALLY SIGNIFICANT COMPONENTS OF FEATURE f

S40

STORE THE IMAGE AND ITS REPRESENTATION INTO THE DATABASE

*FIG. 1*

EP 1 045 313 A2

Description

## FIELD OF THE INVENTION

The invention relates generally to the field of digital image processing and, more particularly, to storing and retrieving images based on perceptionally significant features.

## BACKGROUND

To effectively utilize a large image collection (or database), efficient selection and/or retrieval of images that are similar to a given example or query image is essentially required. The most common approach to searching a database to select/retrieve images that are similar to a query is to compare the query image with the images in the database using their feature-based representation by means of distance functions. [See U.S. Patent 5,579,471, R. J. Barber et al., "Image query system and method"; U.S. Patent 5,852,823, J. S. De Bonet, "Automatic image classification and retrieval system from database using query-by-example paradigm"; WO 98/52119, S. Chang and J. R. Smith, "Feature and region based method for database image retrieval"; M. J. Swain and D. H. Ballard, "Color indexing, Intl. Journal, of Computer Vision," Vol. 7, No. 1, 1991, pp. 11-32; and, G. Pass, et al. "Comparing images using color coherence vectors," Proceedings ACM Multimedia Conf., 1996.] All these techniques represent an image in terms of its depictive features, such as color or texture. Given a query image Q, its feature-based representation is compared against the representation of every image I in the database to compute the similarity of Q and I. The images in the database are then ranked in decreasing order of their similarity with respect to the query image to form the response to the query.

A key shortcoming of these techniques is that no distinction is made between perceptually significant and insignificant image features in the image representation and matching schemes. In general, a human observer determines the content-based similarity of two images primarily on the basis of the perceptually significant contents of the image and not the finer details. By mimicking this behavior, a similarity retrieval system can produce results that are in more agreement with human interpretation of similarity. However, this fact has not been exploited by any of the existing techniques. The present invention overcomes this shortcoming by representing an image in terms of its perceptually significant features. Thus, similarity of two images becomes a function of the similarity of their perceptually significant features.

## SUMMARY OF THE INVENTIONS

The present invention is directed to overcoming one or more of the problems set forth above. Briefly summarized, according to one aspect of the present invention, a method for archiving an image based on its depictive feature-based representation, the method comprising the steps of: automatically extracting the representation of the image in terms of one or more perceptually significant depictive features that dominate a perception of the image; and storing the image and its representation in a database.

In light of the state of the art described above, an object of this invention is to provide a method for depictive feature-based representation of an image that represents an image in terms of its perceptually significant features.

The second object is to provide a scheme for archiving images in a database using perceptually significant feature-based image representation.

The third object is to provide an image retrieval system that can effectively handle selection and/or retrieval of images similar to an example (or query) image using perceptually significant feature-based image representation.

These and other aspects, objects, features and advantages of the present invention will be more clearly understood and appreciated from a review of the following detailed description of the preferred embodiments and appended claims, and by reference to the accompanying drawings.

## BRIEF DESCRIPTION OF THE DRAWINGS

Fig. 1 is a flowchart illustrating an overview of the software program of the present invention;
Fig. 2 is a flowchart illustrating one method computing perceptually significant colors in an image;
Fig. 3 is a flowchart illustrating a second method computing perceptually significant colors in an image;
Fig. 4 is a flowchart illustrating perceptually significant textures in an image;
Fig. 5 is a diagram of an index structure used to organize images; and,
Fig. 6 is a flowchart illustrating image retrieval using an example image.

## DESCRIPTION OF THE PREFERRED EMBODIMENTS

In the following description, the present invention will be described in the preferred embodiment as a software program. Those skilled in the art will readily recognize that the equivalent of such software may also be constructed in hardware.

Still further, as used herein, computer readable storage medium may comprise, for example; magnetic storage media such as a magnetic disk (such as a floppy disk) or magnetic tape; optical storage media such as an optical disc, optical tape, or machine readable bar code; solid state electronic storage devices such as random access memory (RAM), or read only memory (ROM); or any other physical device or medium employed to store a computer program.

Still further, the present invention is implemented on a computer system. Such computer systems are well known in the art and will not be discussed in detail herein.

This invention provides a depictive feature-based image archival and retrieval system which consists of two functional phases. In the first phase, called the image archival phase, every image to be stored and managed by the system is processed to automatically extract its depictive feature-based representation. The image representation and the image are stored in a database and a search index is updated to enable the image representation to participate in future depictive feature-based image selection and/or retrieval. The second phase, called the image retrieval phase, is concerned with the retrieval and/or selection of images that satisfy the user-specified depictive feature-based constraints. Note that the image color space can be transformed into any predefined or desired color space for archival and retrieval phase. The embodiment details given below are applicable to images of any color space (e.g., RGB, YCC, HSV, CIE color spaces, etc.). Also, images can be transformed to a desired compressed dynamic range in both phases to reduce the computational cost and storage requirements.

### Image Archival Phase-

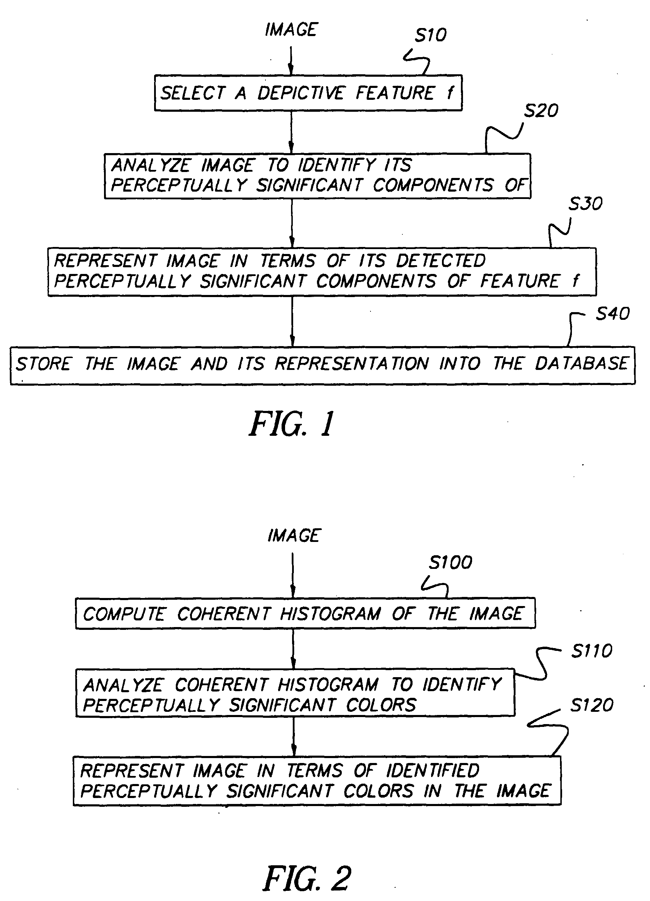

The main steps of the image archival phase are shown in Figure 1. Each input image is analyzed to build its representation. An image can be represented in terms of several different depictive features such as color, texture, and color composition. Referring to Figure 1, a depictive feature *f* is first selected, S10. In the preferred embodiment, either color or texture can be selected. The image is analyzed to identify its perceptually significant components in terms of feature *f,* S20. A depictive feature of an image is considered a perceptually significant depictive feature if it dominates an observer's perception of the image. For example, the color red is a perceptually significant color feature in an image of a large red flower. The image is then represented in terms of the detected perceptually significant components of the selected feature, S30. The input image and it representation are then added to the image database, S40.

According to the present invention, color feature-based representation of an image is in terms of perceptually significant colors present in the image. The preferred approach to identifying perceptually significant colors of an image is based on the assumption that significantly sized coherently colored regions of an image are perceptually significant. Therefore, colors of significantly sized coherently colored regions are considered to be perceptually significant colors. Preferred embodiment offer two different methods for the identification of perceptually significant colors of an image. One of these methods is selected for setting up a database. The key steps of the first approach are shown in Figure 2. For every input image, its coherent color histogram is first computed, S100. A coherent color histogram of an image is a function of the form *H (c) = number of pixels of color c* that belong to coherently colored regions. Here *c* is a valid color in the dynamic range of the image. A pixel is considered to belong to a coherently colored region if its color is equal or similar to the colors of a pre-specified minimum number of neighboring pixels. The present implementation has two definitions of coherency: (i) a minimum of 2 matching or similar neighbors, and (ii) all neighbors are matching/similar. The same coherency definition must be used for analyzing all images in both the image archival and retrieval phases. Two colors are considered equal if all the corresponding channel values are equal. Two colors $c_1$ and $c_2$ are considered similar if their difference *diff(c₁, c₂)* is less than a user specified threshold $C_T$. The preferred value of $C_T$ is in the range of 15% to 20% of the maximum possible value of *diff(c₁, c₂)*. Several different color difference computation methods are possible. In the present embodiment one of the following three methods for comparing two L-channel colors can be selected at the system initialization time:

(i) Color $c_x$ and $c_y$ are considered similar if $|c_x^i - c_y^i| < C_T^i$, where $c_k^i$ denotes the value of the *i*-th channel of color $c_k$ and $C_T^i$ denotes the pre-specified threshold value for the difference of the *i*-th channel values.
(ii) Color $c_x$ and $c_y$ are considered similar if $\sum_{i=1,L} w_i \cdot (c_x^i - c_y^i)^2 < C_T$, where $c_k^i$ denotes the value of the *i*-th channel of color $c_k$, $w_i$ is the weight of the *i*-th channel, and $C_T$ denotes the pre-specified threshold value.
(iii) Color $c_x$ and $c_y$ are considered similar if $\sum_{i=1,L} w_i \cdot |(c_x^i - c_y^i)| < C_T$, where $c_k^i$ denotes the value of the *i*-th channel of color $c_k$, $w_i$ is the weight of the *i*-th channel, and $C_T$ denotes the pre-specified threshold value.

Then the coherent color histogram is analyzed to identify the perceptually significant colors, S110. A color *k* is considered to a perceptually significant color if $H(k) > T$. Here $T$ is a threshold. In the present implementation $T = 0.5\%$ of total numbers of pixels in the image. The next step is to represent the image in term of it perceptually significant colors, S120. Specifically, an image $I$ is represented by a vector of the form $I_C = \{N, Z, <C_i, S_i>\}, 0 < i < N+1$. Here, $N$ is the number of perceptually significant colors in image $I$, $Z = \Sigma S_i$, $C_i$ is the color value of the $i^{th}$ perceptually significant color of image $I$, and $S_i$ is the ratio of $H(C_i)$ and the total number of pixel in image $I$.

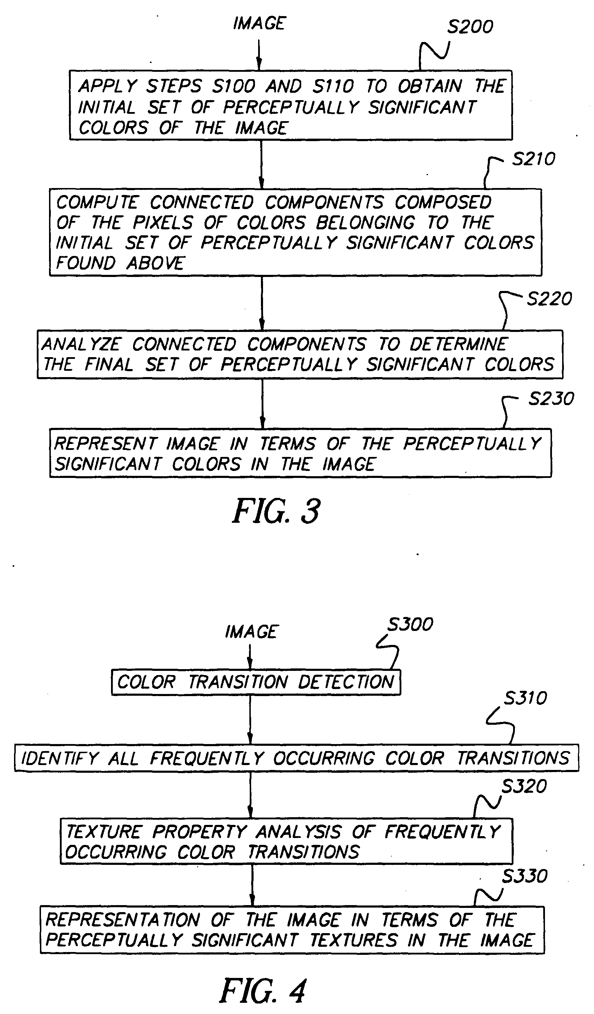

The key steps of the second method for identifying perceptually significant colors of an image are shown in Figure 3. This method is an extension of the first method. In this case, steps S100 and S110 of the first method are performed to detect perceptually significant colors, S200. The set of perceptually significant colors so obtained is considered the initial set of perceptually significant colors and it is refined to obtain the set of dominant perceptually significant colors. The refinement processed starts with the finding of connected components composed solely of the pixels of colors belonging to the initial set of perceptually significant colors, S210. This is accomplished by performing connected component analysis on the input image considering only the pixels of perceptually significant colors (i.e., considering them as the object pixels) and ignoring others (i.e., considering them as the background pixels). Two neighboring pixels (4 or 8-neighbors) with perceptually significant colors (i.e., colors in the initial set of the perceptually significant colors) are considered connected only if they are of matching/similar colors. The connected components so obtain are analyzed to determine the set of dominant perceptually significant colors, S220. A connected component of size greater than a pre-specified threshold $T_s$ is considered a dominant perceptually significant segment. In the present implementation, $T_s = 0.25\%$ of the total number of pixel in the image. Colors belonging to a dominant perceptually significant segments form the set of perceptually significant colors for image representation. The final step is again to represent the image in term of it perceptually significant colors, S230. Note that this final set of perceptually significant colors is a subset of the initial set of perceptually significant colors.

Those skilled in art would recognize that several variations of the above two color-based image representations are possible within the scope of this work. For example, one straightforward extension is a combination of the two representations, where the representation of method 1 is extended by qualifying each perceptually significant color by a type which indicates whether or not that colors belongs to a dominant perceptually significant segment.

According to the present invention, texture feature-based representation of an image is in terms of perceptually significant textures present in the image, random or structured. The preferred approach to identifying perceptually significant textures of an image is based on the assumption that each perceptually significantly texture is composed of large numbers of repetitions of the same color transition(s). Therefore, by identifying the frequently occurring color transitions and analyzing their textural properties, perceptually significant textures can be extracted and represented. The preferred embodiment for the identification of perceptually significant textures of an image is shown in Figure 4. For every input image, the first step in the process is to detect all the color transitions that are present in the image, S300. A color transition occurs between a current pixel $(c)$ and its previous pixel $(p)$ if a change of color value, $dist(c, p)$, is greater than a predefined threshold $th$. The preferred value of $th$ is in the range of 15% to 20% of the maximum possible value of $dist(c, p)$. A pixel where a color transition occurs is referred to as a color-transition-pixel. In the present embodiment, one of the following two methods for comparing two L-channel colors can be selected to determine the occurrence of a change of color value, hence, a color transition:

(i) The current pixel is identified to be a color-transition-pixel if

$$|c.ch_0 - p.ch_0| \geq th.ch_0 \text{ or } |c.ch_1 - p.ch_1| \geq th.ch_1 \text{ ...or } |c.ch_i - p.ch_i| \geq th.ch_i \quad 0 \leq i \leq L$$

where $c.ch_i$ represents the $i$-th color channel value of the current pixel, $p.ch_i$ represents the $i$-th color channel value of the previous pixel, and $th.ch_i$ represents the predefined difference threshold for the $i$-th color channel.

(ii) The current pixel is identified to be a color-transition-pixel if

$$\sqrt{\sum_{i=0,L} (c.ch_i - p.ch_i)^2} \geq th$$

where $c.ch_i$ represents the $i$-th color channel value of the current pixel, $p.ch_i$ represents the $i$-th color channel value of the previous pixel, and $th$ represents the predefined color difference threshold.

Those skilled in art would recognize that the concept of color transition can be defined as gray-level or brightness transition in case of monochromatic images. They would also recognize that other color difference metrics can be employed for determining the existence of a color transition within the scope of this invention. An image is scanned horizontally and vertically to identify all color-transition-pixels using one of the above methods. Every color-transition-pixel signals a color transition and each color transition is represented by the two colors *(c1, c2)* corresponding to the previous and the current pixel color values that form the color transition. The second step in the process is to identify all the frequently occurring color transitions, S310. Two dimensional color transition histograms with *c1* and *c2* being the two dimensions are constructed to record the frequency of various color transitions found in the previous step. The preferred embodiment offers three options for constructing and populating the color transition histograms. The first option involves the construction of a global color transition histogram, which will be populated by all the color transitions found in the image. Finding all the peaks in the color transition histogram that also exceeds a predefined minimum frequency of occurrence threshold identifies the frequently occurring color transitions. The preferred minimum frequency threshold for identifying frequently occurring color transitions for global color transition histogram is 0.25% of the total number of pixels in the image. The second option involves tessellating the image into non-overlapping sections and then constructing a set of sectional transition histograms, which are populated by color transitions, found in corresponding image sections. In the present embodiment, a set of 24 sectional histograms is constructed. Finding all the peaks in all of the sectional transition histograms that also exceeds a predefined minimum frequency of occurrence threshold identifies the frequently occurring color transitions. The preferred minimum frequency threshold for identifying frequently occurring color transitions for sectional color transition histogram is 2.5% of the total number of pixels in each tessellated section. The final option is a combination of the two above-mentioned methods where both the global and the sectional histograms are constructed and all the peaks are identified in the above-mentioned manner. These peaks represent the most frequently occurring color transitions, which correspond to perceptually significant textures in the image. The third step in the process is texture property analysis of frequently occurring color transitions to represent perceptually significant textures, S320. For every frequently occurring color transition, all the occurrences of this particular color transition in the entire image are found, and a scale and a gradient value is calculated. In the current embodiment, scale is calculated as the distance in terms of pixels, between the occurrence of color *c1* and color *c2.* Gradient is calculated as $tan^{-1}(gy/gx)$ where $g_y$ and $g_x$ are the vertical and horizontal edge information at the color transition respectively, calculated using the Sobel operator. Note that other techniques for calculating scale and gradient values are possible without exceeding the scope of this invention. The calculated scale and gradient values for each occurrence are used to construct a scale-gradient histogram. After all the occurrences have been accounted, the scale-gradient histogram is used to analyze the textural properties of the perceptually significant texture. For random textures, the scale gradient histogram is randomly distributed, while for structured textures, a significantly sharp mode in scale, gradient, or both can be detected in the scale-gradient histogram. For a color transition corresponding to a random texture, the scale-gradient histogram is used to compute the scale-gradient mean vector and the scale-gradient co-variance matrix. For a color transition corresponding to a structured texture, the corresponding histogram mode is used to compute the scale-gradient mean vector and the scale-gradient co-variance matrix. These properties are used to represent a perceptually significant texture. The final step is to represent an image in terms of its perceptually significant textures, S330. An image I is represented by a vector of the form $I_T = \{N, Z, < C^1_i, C^2_i, P_i, M_i, V_i, S_i, >\}, 0 < i < N+1$. Here $N$ is the number of dominant perceptually significant textures in image *I*; $Z = \Sigma \ S_i$; $C^1_i$ and $C^2_i$ are the color value of the frequently occurring color transition corresponding to the *i*-th perceptually significant texture; $P_i$ is the textural type of the *i*-th perceptually significant texture, taking on one of the following possible values: random, scale-structured, gradient-structured, or scale-gradient-structured; $M_i$ and $V_i$ are the scale-gradient mean vector and scale-gradient covariance matrix of the *i*-th perceptually significant texture in the set, respectively, and $S_i$ is the total area coverage of the *i*-th perceptually significant texture calculated by accumulating all the scale values over all the occurrences of the frequently occurring color transition corresponding to the *i*-th perceptually significant texture. Those skilled in art would recognize that other textural properties, or a subset/superset of $I_T$ can be employed to represent a perceptually significant texture.

After generating the perceptually significant feature-based image representation, the next step is to insert the image and the associated representation into the database and appropriate index structures. Those skilled in art would recognize that the overall database organization is dependent on the underlying database/file management system. Also, the indexing schemes are dependent on the types of queries and their expected frequency. In the present implementation, the images reside in the image database. For every registered image, a thumbnail version is created, which is stored in the thumbnail database. The thumbnail versions of the images are used for displaying the search/retrieval results. The image representations (metadata) are stored in the metadatabase. In addition to the perceptually significant feature representations, an image representation (metadata) also contains the image identifier/locator which act as a reference to the image file as well as the corresponding thumbnail. The image name/id acts as a locator of its representation. Note that in the current implementation color and texture representations are organized in separate structures, but they share the common image and thumbnail set.

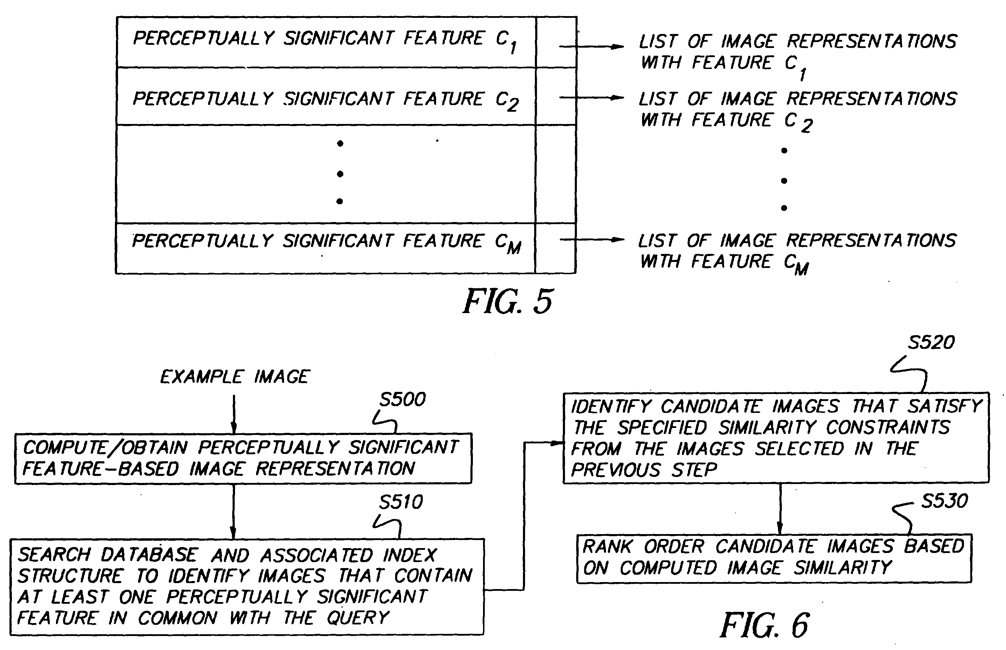

Those skilled in art would recognize that the choice of index structure for organizing a data set is dependent on the desired functions to be performed by the index structure. The functionality needed in the current implementation is to facilitate selection and retrieval of images that are similar to a given query/example image. In order to facilitate this functionality, the conceptual index structure used to organize color/texture representation is shown in Figure 5. Given a perceptually significant feature value $f$, this organization provides the list of pointers/references to all image representations in the database that contain the feature $f$. Those skilled in art would recognize that this conceptual index structure could be implemented in a variety of ways within the scope of this invention. They would also recognize that various other index structures are possible to accomplish the desired tasks. In general, the importance of a perceptually significant feature is directly proportional to the corresponding $S$ value in the representation. Therefore, instead of adding the image representation to the list of image representations associated with every one of its perceptually significant features, the current implementation offers an option to limit the insertion of the representation to only the lists associated with the principal features in that particular image. In the preferred embodiment, a perceptually significant feature is considered principal if its S value is greater than a threshold value $G$ or if its $S$ value is one of the $M$ largest $S$ values of the perceptually significant feature of the image. The values of $G$ and $M$ are set at the time of system installation/initialization. Note that one of the options is to consider every perceptually significant feature of an image as a principal perceptually significant feature.

In the preferred embodiment, for color-based searches, perceptually significant (dominant perceptually significant) color based index is created. That is, given a color value, the index provides a list of images containing that color as a perceptually significant color. For texture-based searches, one or both of the following two indices are created: (a) an index that associates with a color-transition value, a list of images and corresponding representations that contain perceptually significant textures composed of that color-transition, and (b) an index that associated with a (color-transition, texture type) pair, a list of images and corresponding representation that contain perceptually significant textures of that type composed of that color-transition. If the textural similarity of two images constrain the texture type to be the same, then (color-transition, texture type) pair-based index is used to search for the desired images. Otherwise, color-transition-based index is searched.

**Image Selection/Retrieval Phase** -

In the image selection/retrieval phase, a search/retrieval request specifies a query/example images and certain constraints that must be satisfied by the retrieved or selected images. The permitted constraints in the preferred implementation are (i) minimum number perceptually significant query/example image's features that must be matched, (ii) the minimum percentage of the total size of perceptually significant features of the query image that must match, and (iii) a logical combination of the two constraints. Images similar to a query/example image and also satisfy the specified constraints are selected and/or retrieved. To accomplish this, the appropriate index search is first performed to select images that contain one or more perceptually significant features (or principal perceptually significant features if principal perceptually significant feature-based index is employed) of the query/example image. The representation of every selected image is then analyzed to determine if it satisfies the specified constraints mentioned above, and for images that satisfy the constraints, a measure of similarity with the query/example is computed, and they are retrieved as candidate images. The candidate images are then ranked based on their similarity value to the query/example image.

The key steps of the example image-based similar image retrieval/selection process are shown in Figure 6. Given a query/example image, its desired representation (i.e., color or texture-based) is computed or obtained, S500. If the query/example image is selected from the current database of images, its representation is obtained from the database. If the query/example image is a new image then its representation is computed. Next, the metadata database or the associated index structure is searched to find candidate images that can potentially meet the search criteria, S510. This is accomplished by searching the index structure to identify images that contain at least one perceptually significant feature (or principal perceptually significant feature if principal perceptually significant feature-based representation is employed) common with the query/example image. For the preferred index structure, this is accomplished by searching the index structure for every perceptually significant (or principal perceptually significant) feature $f_p$ to find images with feature $f_p$ as a perceptually significant (or principal perceptually significant) feature. The union of the set of images obtained from each individual search forms the set of selected images. The representation of each selected image is compared with the representation of the query image to select candidate images that satisfy the specified constraints, S520. Optionally, for each image that satisfies the search/retrieval constraints, a measure of similarity with the query image is computed, and the set of selected images is rank ordered based on the computed image similarity, S530.

For color-based image selection/retrieval, the index structure based on perceptually significant or principal perceptually significant colors is searched to find images containing in their representation at least one of the query image's perceptually significant (or principal perceptually significant) color. The preferred options for a measure of similarity for the color-based representations are:

$$(a) \quad D(q,d) = \sum_{i=1}^{N} \min(S_i^q, S_i^d)$$

$$(b) \quad D(q,d) = diff(\Omega^q, \Omega^d)$$

where in N is the number of matching colors of query image $q$ and image $d$ in the database; $S_i^q$ and $S_i^d$ are the size attribute values for the $i$-th matching color of images $q$ and $d$, respectively; *diff* is a normalized distance function of the type $L_x|.|$ norm for a given $x$; and $\Omega_q$ and $\Omega_d$ are the set of size attribute values of the corresponding perceptually significant colors of images $q$ and $d$.

For texture-based image selection/retrieval, the index structure based on perceptually significant (or principal perceptually significant) textures is searched to find images that both contain at least one of the query image's perceptually significant (or principal perceptually significant) textures in their representation, and also meet the specified candidacy constraints. The resulting set of candidate images is further compared with the query/example image to determine the candidate's texture-based similarity to the query/example image. The preferred measure of similarity between the query/example image and the candidate image is dependent on the similarity of matching, or common, perceptually significant textures, and also the total area coverage in the query/example image and the candidate image by the matching/common perceptually significant textures. Two perceptually significant textures are matching/common if they have matching color values *C1, C2,* and the same texture property value *P* (random or structured) in their representation. In the preferred embodiment, for each matching/common perceptually significant texture, the similarity of matching perceptually significant texture is calculated from the scale-gradient mean vector *M* and the scale-gradient covariance matrix *V* using either Euclidean distance or Mahalanobis distance. Note that other distance functions may also be used within the scope of this invention. The overall image similarity score between the candidate and the query/example image is determined as the sum of the similarity value of all the matching perceptually significant textures multiplied by the relative area coverage *S* of the texture in the image. Note that in general, the Mahalanobis distance is not a symmetric distance, the distance from distribution *A* to distribution *B* is different from the distance from distribution *B* to distribution *A*. In addition, the relative area coverage *S* is different in the candidate and the query image. Therefore, two overall image similarity scores generally result from the similarity calculation: one from the query to the candidate $S_{q-c}$, and one from the candidate to the query $S_{c-q}$. The preferred embodiment has 5 different options for obtaining one single similarity metric. The first two options take either $S_{q-c}$ or $S_{c-q}$ as the final overall similarity metric; the third option takes the maximum of $S_{q-c}$ and $S_{c-q}$; the fourth option takes the average of $S_{q-c}$ and $S_{c-q}$; and the fifth option takes the product of $S_{q-c}$ and $S_{c-q}$. Other combinatorial methods can also be used without exceeding the scope of this invention. After calculating the similarity metric for all the candidate images, they can be rank ordered and displayed according to their similarity metric.

Those skilled in art would recognize that other similarity measures could be employed within the scope of this work. The thumbnails of the selected images can be optionally retrieved and displayed in ranked order.

Other aspects of the invention include:

1. A method wherein the step of storing image representations in the database includes organizing perceptually significant texture-based image representations in a texture-based index structure.

2. A method for searching an image database to select or retrieve images similar to a given example image using perceptually significant depictive feature based image representations, the method comprising the steps of:

(a) providing a example image and one or more perceptually significant depictive feature-based constraints to define image similarity;
(b) providing a database of images and associated perceptually significant depictive feature-based representations;
(c) conducting one or more of searches of image representation database to select images that satisfy the specified similarity constraints; and
(d) computing the overall similarity of the selected images with the example image.

3. A method wherein step of specifying perceptually significant depictive feature-based constraints includes providing one or more constraints based on the properties of the perceptually significant colors.

4. A method wherein step of specifying perceptually significant depictive feature-based constraints includes providing one or more constraints based on the properties of the perceptually significant textures.

5. A method wherein the step of providing the database of perceptually significant depictive feature-based image representations includes providing a database organized in a index structure.

6. A method wherein the step of providing the database organized in the index structure includes providing a perceptually significant depictive color-based image representations organized in a color-based index.

7. A method wherein the step of providing the database organized in the index structure includes providing a perceptually significant depictive texture-based image representations organized in a texture-based index.

8. A system for archiving an image based on its depictive feature-based representation, the system comprising:

    (a) means for automatically extracting the representation of the image in terms of one or more perceptually significant depictive features that dominate a perception of the image; and
    (b) means for storing the image and its representation in a database.

9. The system wherein the means for automatically extracting a perceptually significant depictive feature-based representation of the image includes means for extraction of its perceptually significant color-based representation.

10. The system wherein the means for automatically extracting a perceptually significant depictive feature-based representation of the image includes means for extraction of its perceptually significant texture-based representation.

11. The system wherein the step of extracting perceptually significant colors of an image includes means for extracting and analyzing of coherent color histogram of the image.

12. The system wherein the means for extracting perceptually significant colors of an image includes means for detecting and analyzing coherently colored segments of the image.

13. The system wherein the means for extracting perceptually significant texture-based image representation includes means for detecting and analyzing color transitions in the image.

14. The system wherein the means for extracting perceptually significant texture-based image representation includes means for constructing and analyzing color transition histograms.

15. The system wherein the means for extracting perceptually significant texture-based image representation includes means for constructing and analyzing scale-gradient histograms of color transitions.

16. The system wherein the means for storing image representations in the database includes means for organizing the representations in a set of index structures to facilitate efficient searches of the database to select the desired images.

17. A system wherein the means for storing image representations in the database includes means for organizing perceptually significant color-based image representations in a color-based index structure.

18. The system wherein the means for storing image representations in the database includes means for organizing perceptually significant texture-based image representations in a texture-based index structure.

19. A system for searching an image database to select or retrieve images similar to a given example image using perceptually significant depictive feature based image representations, the system comprising:

    (a) means for providing a example image and one or more perceptually significant depictive feature-based constraints to define image similarity;
    (b) means for providing a database of images and associated perceptually significant depictive feature-based representations;
    (c) means for conducting one or more of searches of image representation database to select images that satisfy the specified similarity constraints; and

(d) means for computing the overall similarity of the selected images with the example image.

20. The system wherein the means for specifying perceptually significant depictive feature-based constraints includes means for providing one or more constraints based on the properties of the perceptually significant colors.

21. The system wherein step of specifying perceptually significant depictive feature-based constraints includes providing one or more constraints based on the properties of the perceptually significant textures.

22. The system wherein the means for providing the database of perceptually significant depictive feature-based image representations includes means for providing a database organized in a index structure.

23. The system wherein the means for providing the database organized in the index structure includes means for providing a perceptually significant depictive color-based image representations organized in a color-based index.

24. The system wherein the means for providing the database organized in the index structure includes means for providing a perceptually significant depictive texture-based image representations organized in a texture-based index.

25. A computer program product for archiving an image based on its depictive feature-based representation, comprising: a computer readable storage medium having a computer program stored thereon for performing the steps of:

(a) automatically extracting the representation of the image in terms of one or more perceptually significant depictive features that dominate a perception of the image; and
(b) storing the image and its representation in a database.

26. The computer program product wherein the step (a) of automatically extracting a perceptually significant depictive feature-based representation of the image includes extraction of its perceptually significant color-based representation.

27. The computer program product wherein the step of automatically extracting a perceptually significant depictive feature-based representation of the image includes extraction of its perceptually significant texture-based representation.

28. The computer program product wherein the step of extracting perceptually significant colon of an image includes extracting and analyzing of coherent color histogram of the image.

29. The computer program product wherein the step of extracting perceptually significant colors of an image includes detecting and analyzing coherently colored segments of the image.

30. The computer program product wherein the step of extracting perceptually significant texture-based image representation includes detecting and analyzing color transitions in the image.

31. The computer program product wherein the step of extracting perceptually significant texture-based image representation includes constructing and analyzing color transition histograms.

32. The computer program product wherein the step of extracting perceptually significant texture-based image representation includes constructing and analyzing scale-gradient histograms of color transitions.

33. The computer program product wherein the step of storing image representations in the database includes organizing the representations in a set of index structures to facilitate efficient searches of the database to select the desired images.

34. The computer program wherein the step of storing image representations in the database includes organizing perceptually significant color-based image representations in a color-based index structure.

35. The computer program product wherein the step of storing image representations in the database includes organizing perceptually significant texture-based image representations in a texture-based index structure.

36. A computer program product for searching an image database to select or retrieve images similar to a given example image using perceptually significant depictive feature based image representations, comprising: a computer readable storage medium having a computer program stored thereon for performing the steps of:

(a) providing a example image and one or more perceptually significant depictive feature-based constraints to define image similarity ;
(b) providing a database of images and associated perceptually significant depictive feature-based representations;
(c) conducting one or more of searches of image representation database to select images that satisfy the specified similarity constraints; and
(d) computing the overall similarity of the selected images with the example image.

37. The computer program product wherein step of specifying perceptually significant depictive feature-based constraints includes providing one or more constraints based on the properties of the perceptually significant colors.

38. The computer program product wherein step of specifying perceptually significant depictive feature-based constraints includes providing one or more constraints based on the properties of the perceptually significant textures.

39. The computer program product wherein the step of providing the database of perceptually significant depictive feature-based image representations includes providing a database organized in a index structure.

40. The computer program product wherein the step of providing the database organized in the index structure includes providing a perceptually significant depictive color-based image representations organized in a color-based index.

41. The computer program product wherein the step of providing the database organized in the index structure includes providing a perceptually significant depictive texture-based image representations organized in a texture-based index.

**Claims**

1. A method for archiving an image based on its depictive feature-based representation, the method comprising the steps of:

(a) automatically extracting the representation of the image in terms of one or more perceptually significant depictive features that dominate a perception of the image; and
(b) storing the image and its representation in a database.

2. The method as in claim 1, wherein the step (a) of automatically extracting a perceptually significant depictive feature-based representation of the image includes extraction of its perceptually significant color-based representation.

3. The method as in claim 1, wherein the step (a) of automatically extracting a perceptually significant depictive feature-based representation of the image includes extraction of its perceptually significant texture-based representation.

4. The method as in claim 2, wherein the step of extracting perceptually significant colors of an image includes extracting and analyzing of coherent color histogram of the image.

5. The method as in claim 2, wherein the step of extracting perceptually significant colors of an image includes detecting and analyzing coherently colored segments of the image.

6. The method as in claim 3, wherein the step of extracting perceptually significant texture-based image representation includes detecting and analyzing color transitions in the image.

7. The method as in claim 6, wherein the step of extracting perceptually significant texture-based image representation includes constructing and analyzing color transition histograms.

8. The method as in claim 6, wherein the step of extracting perceptually significant texture-based image representation includes constructing and analyzing scale-gradient histograms of color transitions.

9. A method as in claim 1, wherein the step (b) of storing image representations in the database includes organizing the representations in a set of index structures to facilitate efficient searches of the database to select the desired images.

10. A method as in claim 9, wherein the step (b) of storing image representations in the database includes organizing perceptually significant color-based image representations in a color-based index structure.

IMAGE        S10

SELECT A DEPICTIVE FEATURE f

S20

ANALYZE IMAGE TO IDENTIFY ITS
PERCEPTUALLY SIGNIFICANT COMPONENTS OF

S30

REPRESENT IMAGE IN TERMS OF ITS DETECTED
PERCEPTUALLY SIGNIFICANT COMPONENTS OF FEATURE f

S40

STORE THE IMAGE AND ITS REPRESENTATION INTO THE DATABASE

FIG. 1

IMAGE

S100

COMPUTE COHERENT HISTOGRAM OF THE IMAGE

S110

ANALYZE COHERENT HISTOGRAM TO IDENTIFY
PERCEPTUALLY SIGNIFICANT COLORS

S120

REPRESENT IMAGE IN TERMS OF IDENTIFIED
PERCEPTUALLY SIGNIFICANT COLORS IN THE IMAGE

FIG. 2

IMAGE        S200

APPLY STEPS S100 AND S110 TO OBTAIN THE INITIAL SET OF PERCEPTUALLY SIGNIFICANT COLORS OF THE IMAGE

S210

COMPUTE CONNECTED COMPONENTS COMPOSED OF THE PIXELS OF COLORS BELONGING TO THE INITIAL SET OF PERCEPTUALLY SIGNIFICANT COLORS FOUND ABOVE

S220

ANALYZE CONNECTED COMPONENTS TO DETERMINE THE FINAL SET OF PERCEPTUALLY SIGNIFICANT COLORS

S230

REPRESENT IMAGE IN TERMS OF THE PERCEPTUALLY SIGNIFICANT COLORS IN THE IMAGE

## FIG. 3

IMAGE        S300

COLOR TRANSITION DETECTION

S310

IDENTIFY ALL FREQUENTLY OCCURRING COLOR TRANSITIONS

S320

TEXTURE PROPERTY ANALYSIS OF FREQUENTLY OCCURRING COLOR TRANSITIONS

S330

REPRESENTATION OF THE IMAGE IN TERMS OF THE PERCEPTUALLY SIGNIFICANT TEXTURES IN THE IMAGE

## FIG. 4

| | |
|---|---|
| PERCEPTUALLY SIGNIFICANT FEATURE $C_1$ | $\longrightarrow$ |
| PERCEPTUALLY SIGNIFICANT FEATURE $C_2$ | $\longrightarrow$ |
| $\bullet$ $\bullet$ $\bullet$ | |
| PERCEPTUALLY SIGNIFICANT FEATURE $C_M$ | $\longrightarrow$ |

LIST OF IMAGE REPRESENTATIONS WITH FEATURE $C_1$

LIST OF IMAGE REPRESENTATIONS WITH FEATURE $C_2$

$\bullet$
$\bullet$
$\bullet$

LIST OF IMAGE REPRESENTATIONS WITH FEATURE $C_M$

*FIG. 5*

EXAMPLE IMAGE

S500

COMPUTE/OBTAIN PERCEPTUALLY SIGNIFICANT FEATURE–BASED IMAGE REPRESENTATION

S510

SEARCH DATABASE AND ASSOCIATED INDEX STRUCTURE TO IDENTIFY IMAGES THAT CONTAIN AT LEAST ONE PERCEPTUALLY SIGNIFICANT FEATURE IN COMMON WITH THE QUERY

S520

IDENTIFY CANDIDATE IMAGES THAT SATISFY THE SPECIFIED SIMILARITY CONSTRAINTS FROM THE IMAGES SELECTED IN THE PREVIOUS STEP

S530

RANK ORDER CANDIDATE IMAGES BASED ON COMPUTED IMAGE SIMILARITY

*FIG. 6*

EP 1 045 313 A2